(19) **Europäisches Patentamt**
**European Patent Office**
**Office européen des brevets**

(11) **EP 3 054 678 A1**

(12) **EUROPEAN PATENT APPLICATION**

(43) Date of publication:
**10.08.2016 Bulletin 2016/32**

(51) Int Cl.:
*H04N 19/105* (2014.01)     *G06K 9/62* (2006.01)
*H04N 19/176* (2014.01)     *H04N 19/593* (2014.01)
*H04N 19/136* (2014.01)

(21) Application number: **15305164.4**

(22) Date of filing: **04.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Zepeda, Joaquin
35576 Cesson-Sévigné (FR)**

• **Turkan, Mehmet
35576 Cesson-Sévigné (FR)**
• **Thoreau, Dominique
35576 Cesson-Sévigné (FR)**

(74) Representative: **Huchet, Anne
Technicolor
1, rue Jeanne d'Arc
92443 Issy-les-Moulineaux Cedex (FR)**

(54) **Method and device for predicting an image block**

(57)     A method, in an encoder or a decoder, for predicting a current block of an image is disclosed. The method comprises:
- determining (10, 12) a weighted linear combination of templates belonging to a cell selected from a template space partitioned into cells so that the weighted linear combination approximates a template associated with said current block;
- generating (14) a predictor for the current block from the determined weighted linear combination; and
- adding (16) the current template and the templates of blocks that overlap the current block and the causal region of said current block in at least one cell of the template space.

FIGURE 5

**Description**

1. TECHNICAL FIELD

In the following, a method and a device, in an encoder or a decoder, for predicting a block of an image, i.e. an image block, are disclosed.

2. BACKGROUND ART

New video coding standard known as HEVC gives significant gains over H.264/AVC through innovations such as improved intra-prediction, larger block sizes, more flexible ways of decomposing blocks for intra- and intercoding. Knowing that approximately 1/3rd of an HEVC bit-stream is occupied by intra-coded image, improving intra prediction is still of interest. Intra prediction refers to the fact that the prediction technique is performed using only the information that is contained within an image (image of I type) in a video sequence. A block in the image is intra predicted. A residue is obtained from the block and its prediction. Then the residue, instead of the block itself, is encoded in order to minimize the encoded/transmitted information to the decoder. Similar to patch-based texture synthesis, most of the image prediction algorithms operate on square patches, i.e., blocks of size n x n, in a raster scan order. The blocks usually do not overlap so that residues are transformed, quantized, and entropy encoded disjointly. A reconstructed/decoded block is finally obtained by adding a decoded residue to the prediction.

The H.264/AVC and HEVC intra prediction approaches that are based on directional modes are suitable in the presence of contours when the directional mode chosen corresponds to the orientation of the contour. However, they tend to fail in more complex structures and textured areas. An alternative method based on template matching has been widely considered for intra image prediction. A template is composed of decoded pixels in a close neighborhood of the unknown block to be predicted. The best match between the template and a candidate texture patch neighborhood (of the same shape as the template), within a causal search window, allows finding the predictor of the unknown block. Template matching algorithm has been shown to be very efficient. However, its complexity prevents this algorithm to find a place in the standardization procedure.

3. BRIEF SUMMARY

A method, in an encoder or a decoder, for predicting a current block of an image is disclosed. The method comprises:

- determining a weighted linear combination of templates belonging to a cell selected from a template space partitioned into cells so that the weighted linear combination approximates a template associated with the current block;
- generating a predictor for the current block from the determined weighted linear combination; and
- adding the current template and the templates of blocks that overlap the current block and the causal region of the current block in at least one cell of the template space.

Advantageously, the method is applied on a next block.

As an example, each cell is further partitioned into spatial areas and wherein the weighted linear combination of templates uses solely templates of spatial areas that overlap at least partially a causal neighborhood of the current block.

In a specific embodiment, the template space is partitioned into cells, each of them being partitioned into sub-cells, wherein selecting a cell comprises selecting a cell and selecting in the cell a sub-cell.

In a specific embodiment, in the case where each cell is represented by a centroid, selecting a cell comprises determining, for each cell, a distance between the centroid of the cell and the template associated with the current block and selecting the cell for which the distance is the shortest.

In a specific embodiment, in the case where each cell is represented by a centroid, adding the current template and the templates of blocks that overlap the current block and a causal region of the current block in at least one cell of the template space comprises adding a template in a cell with the closest centroid.

A prediction device, in an encoder or a decoder, for predicting a current block of an image is disclosed. The prediction device comprises at least a processor configured to:

- determine a weighted linear combination of templates belonging to a cell selected from a template space partitioned into cells so that the weighted linear combination approximates a template associated with the current block;
- generate a predictor for the current block from the determined weighted linear combination; and
- add the current template and the templates of blocks that overlap the current block and the causal region of the current block in at least one cell of the template space.

Advantageously, each cell is further partitioned into spatial areas and wherein the weighted linear combination of templates uses solely templates of spatial areas that overlap at least partially a causal neighborhood of the current block.

In a specific embodiment, the template space is partitioned into cells, each of them being partitioned into sub-cells, wherein selecting a cell comprises selecting a cell and selecting in the cell a sub-cell.

In a specific embodiment, in the case where each cell is represented by a centroid, selecting a cell comprises determining, for each cell, a distance between the centroid of the cell and the template associated with the current block and selecting the cell for which the distance is the shortest.

In a specific embodiment, in the case where each cell is represented by a centroid, adding the current template and the templates of blocks that overlap the current block and a causal region of the current block in at least one cell of the template space comprises adding a template in a cell with the closest centroid.

4. BRIEF SUMMARY OF THE DRAWINGS

- Figure 1 depicts an image of size r by c divided into blocks;
- Figure 2 shows a block $y_t$ and its associated template $\tilde{z}_t$ ;
- Figure 3 depicts a block and its associated template that is approximated by a weighted linear combination of templates ;
- Figure 4 represents a template space divided into clusters themselves divided into sub-clusters with their centroids;
- Figures 5 and 6 represent a flowchart of a method for predicting a block $y_t$ of an image according to specific and non-limitative embodiments;
- Figure 7 represents an exemplary architecture of a prediction device configured to predict at least one block of an image according to an exemplary and non-limiting embodiment;
- Figure 8 represents a flowchart of a method for encoding a block $y_t$ of an image according to a specific and non-limitative embodiment;
- Figure 9 represents an exemplary encoder that implements the prediction method disclosed with respect to figures 5 or 6;
- Figure 10 represents a flowchart of a method for decoding a block of an image according to a specific and non-limitative embodiment; and
- Figure 11 represents an exemplary decoder that implements the prediction method disclosed with respect to figures 5 or 6.

5. DETAILED DESCRIPTION

In the following, the word "reconstructed" and "decoded" can be used interchangeably.

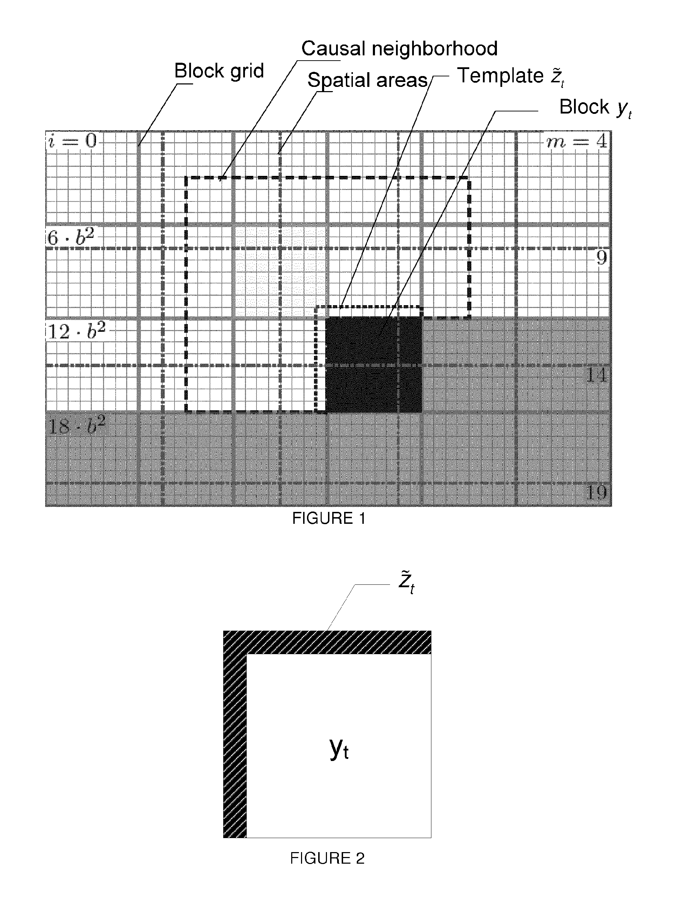

**Figure 1** depicts an image of size r by c, where r is the number of lines and c the number of columns. The image is made of overlapping block $y_i$ of size b by b. $y_i$ represents the i-th such block which has pixel i at its upper left corner. In an encoder/decoder only non-overlapping blocks are predicted. In the following, the subscript t is used to denote non overlapping block indices. t takes non-contiguous values, with t = (k*c*b + l*b) for a block at row k and column l of the block grid. The block grid delimits the non-overlapping blocks. Using a raster-scan (left-to-right, top-to-bottom) encoding/decoding order implies that positions t $\varepsilon \{k*c*b+l*b\}_{kl}$ are processed in order of increasing value of t.

In template prediction, a template defines a shape of neighboring pixels relative to an image block being coded/decoded. The template shape is defined relative to the image block and is formed by a subset of pixels in the causal region outside the image block, but is not required to be located immediately adjacent to the image block. On figure 1, a block $y_t$ to be predicted is represented in black and is aligned on the block grid. On this figure, a template $\tilde{z}_t$ associated with the block $y_t$ is delineated with dots. Figure 2 further shows the block $y_t$ and its associated template $\tilde{z}_t$. The template $\tilde{z}_t$ is built from the 2*b + 1 pixels constituting the top and left boundaries of the block $y_t$. Using such a layout is compatible with raster-scan processing and incurs very low prediction complexity, as only a small number of the previously-decoded pixels are used.

The causal region comprises pixels decoded before the block of index t and is represented in white on figure 1 in a case where decoding is achieved in a raster scan order. On this figure, the causal neighborhood of block t is delineated with a dashed line. The causal neighborhood is a part of the causal region that is spatially close (neighborhood) to the block $y_t$. Spatial areas Bm are delineated by dash-dotted lines. On the figure 1, r=32, c=48, b=8 and each spatial bin is of size 10x10. These values are only for illustrative purpose. The present principles also apply in the case where the prediction is done in an order different from the raster scan order. In this case the shape of the causal region may be different.

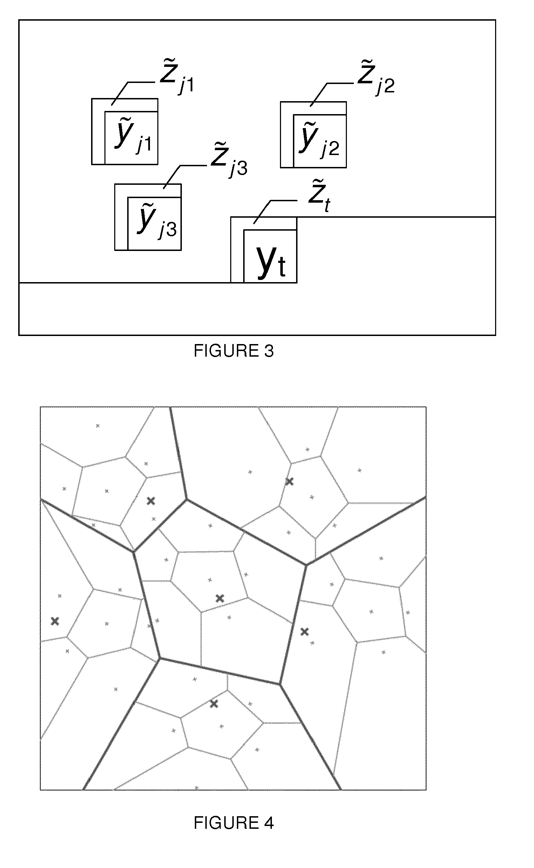

Template based prediction techniques use previously decoded blocks $\tilde{y}_i$, i $\in$ S(t), to predict a current block $y_t$, where S(t) denotes all pixel positions i with a related template $\tilde{z}_i$ and block $\tilde{y}_i$ not falling outside the image and falling within the causal region. $\tilde{y}_i$ indicates a reconstructed/decoded block. In a specific embodiment, the prediction $\hat{y}_t$ of $y_t$ is a linear combination of decoded blocks $\hat{y}_{jk}$, k=1,..., K (K≥1) corresponding to the K nearest templates $\tilde{z}_{jk}$ of $\tilde{z}_t$, with $j_k \in$ S(t). $j_1,..., j_K$ are defined such that $\|\tilde{z}_t - \tilde{z}_{jk}\| \leq \|\tilde{z}_t - \tilde{z}_i\|, \forall i \notin \{j_k\}_k$ where $i, j_k \in S(t)$. Given the indices $j_k$, $\tilde{Z}_t$ denotes the matrix of nearest templates and $\tilde{Y}_t$ the matrix of corresponding blocks from the causal region: $\tilde{z}_t = [\tilde{z}_{j1}|...|\tilde{z}_{jk}]$ and $\tilde{Y}_t = [\tilde{y}_{j1}|...|\tilde{y}_{jk}]$. A prediction $\hat{y}_t$ of $y_t$ is obtained as follows: $\hat{y}_t = \tilde{Y}_t(\tilde{Z}_t^+\tilde{z}_t)$ (equation 1), where the superscript + symbol denotes the pseudo-inverse operation. $(\tilde{Z}_t^+\tilde{z}_t)$ represent the weights of the weighted linear combination. The weights of the weighted linear combination are determined from the template $\tilde{z}_t$ and then applied on $\tilde{Y}_t$ associated with $\tilde{z}_t$ in order to obtain the prediction $\hat{y}_t$. On **figure 3,** the template $\tilde{z}_t$ is approximated by a weighted linear combination of three templates $\tilde{z}_{j1}, \tilde{z}_{j2}$ and $\tilde{z}_{j3}$, specifically by $w_{j1}\tilde{z}_{j1} + w_{j2}\tilde{z}_{j2} + w_{j3}\tilde{z}_{j3}$. Consequently, $\hat{y}_t$ is obtained by reusing the same weights and applying them on the blocks $\tilde{y}_{j1}, \tilde{y}_{j2}$ and $\tilde{y}_{j3}$ associated

with the three templates $\tilde{z}_{j1}$, $\tilde{z}_{j2}$ and $\tilde{z}_{j3}$: $\hat{y}_t = w_{j1}\tilde{y}_{j1} + w_{j2}\tilde{y}_{j2} + w_{j3}\tilde{y}_{j3}$.

A common problem for all template matching-based prediction methods is the prediction of blocks located on the border of the image for which no template is available. A solution to this problem comprises encoding first rows and columns of the image using an alternative encoding. In the following, it is assumed that a template and a causal region is available for all positions i in the image.

### Template space definition

A training set of templates $Z = \{z_l \in R^a\}_l$ is extracted from a large number of training images, where a is the number of pixels in each template. The training set Z is clustered into N clusters. The centroids are thus defined off-line from the training set and used later on for accelerating the template based prediction of image blocks. As an example, a K-means clustering algorithm is used to partition the template space $R^a$ into N cells. It will be appreciated, however, that the present principles are not restricted to the K-means algorithm. Examples of other data clustering algorithms that can be used in approximate search include product-quantization codes, Hamming embedding, locality sensitive hashing, hierarchical K-means, mean shift and combinations thereof. The *k*-means clustering algorithm aims to partition n observations, namely the templates of the training set Z, into N clusters, N being an integer N≥2. Each cluster is represented by a centroid and each observation belongs to the cluster with the closest centroid. The distance between a template and a centroid is for example a pixel by pixel difference. The closest centroid is the one for which this distance is the smallest. Usually, N points are placed, e.g. randomly, in the template space. They represent initial centroids (step a). Each template of the training set Z is then assigned to one cluster (step b), namely to the cluster whose centroid is the closest. When all the templates of the training space are assigned to a cluster, a new centroid's position (step c) is computed for each cluster. The new centroid's position is computed by determining the mean of all the templates in the cluster. The steps b) to c) are repeated until the centroids no longer move. The determined centroids are then used to define cells in the template space. Each cell comprises the points of the template space that are closest to the corresponding centroid. A cell thus defines a region of the template space. On **figure 4,** the centroids are indicated by large x markers and the cells are delineated by a thick line. $C_n = \{z$ such that $n = \text{argmin}_m \|z - c_m\|\}$, where $C_n$ is the cell and $c_m$ is a centroid.

In a variant, a hierarchical variant of the above discussed approach can be obtained by recursively subdividing the cells in a nested manner using hierarchical K-means. As an example, each cell is further sub-divided into sub-cells as depicted on figure 4. The centroids are indicated by small x markers and the sub-cells are delineated by a thin line.

### Image block prediction

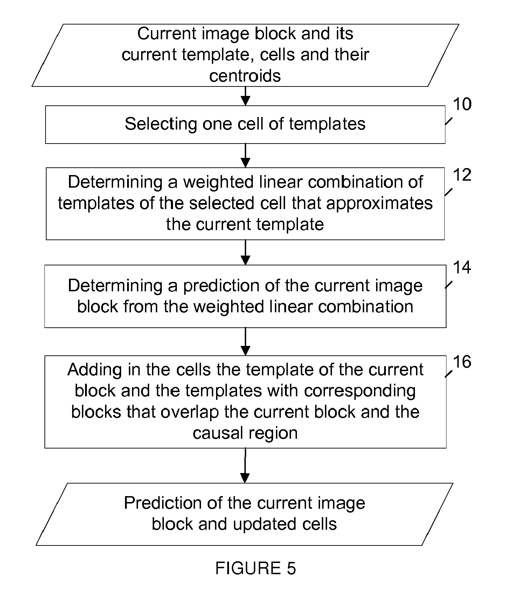

**Figure 5** represents a flowchart of a method for predicting a block $y_t$ of an image according to a specific and non-limitative embodiment. The block is associated with a template $\tilde{z}_t$. The method of prediction supposes that there is a known partitioning of the template space into N cells each being represented by a centroid. The centroids are supposed to be known. The cells have previously been filled with all the blocks in S(t).

In a step 10, one cell of templates is selected among the cells of the template space. To this aim, the centroid that is the closest to the template $\tilde{z}_t$ of the block $y_t$ is determined. Specifically, a distance is computed, for each centroid, between the centroid and the template $\tilde{z}_t$. The shortest distance indicates the closest centroid. The cell of the closest centroid is thus the selected cell. The distance is for example $\|\tilde{z}_t - c_m\|$ where $c_m$ is a centroid and $\|.\|$ is a norm, e.g. the L2-norm.

In a step 12, a weighted linear combination of templates belonging to the selected cell is determined so that the weighted linear combination approximates the current template $\tilde{z}_t$ of said current block. Instead of searching a weighted linear combination from all the available S(t), the weighted linear combination is determined only in a part of S(t), namely the selected cell. Therefore, the algorithm complexity is reduced. In a specific embodiment, the weighted linear combination of templates is formed by the K nearest templates of $\tilde{z}_t$ that belong to the selected cell.

In the case where the template space is recursively subdivided into sub-cells, one cell of the highest level of the hierarchy is first selected by comparing the template $\tilde{z}_t$ with the cell centroids. Then, in the cell firstly selected, the centroid of each of its sub-cells is compared with the template $\tilde{z}_t$ to find the closest centroid. This process may be repeated until the lowest level of the hierarchy is reached and a sub-cell of the lowest level of the hierarchy is selected (step 10). During step 12, a weighted linear combination of templates belonging to the selected sub-cell is determined.

In step 14, a prediction $\hat{y}_t$ is determined for the block $y_t$ based on the weighted linear combination determined at step 12, e.g. by applying equation (1). The weights determined at step 12 are reused. The blocks used in the weighted linear combination are the blocks associated with the templates of the weighted linear combination determined at step 12. As an example, if the weighted linear combination determined at step 12 is $\sum_{j=0}^{K} w_j * \tilde{z}_j$, then $\hat{y}_t = \sum_{j=0}^{K} w_j * \tilde{y}_j$, where $\tilde{y}_j$ is the block associated with the template $\tilde{z}_j$.

In step 16, the template of the current block and the templates with corresponding blocks that overlap the current block and the causal region are added. Specifically, a template is added in the cell with the closest centroid. The templates $\tilde{z}_t$ are indexed at the same time that block $y_t$ is encoded/decoded. The number of templates in the cells thus increases as the templates are added when new blocks are predicted. The cells are thus updated during step 16.

The method may be repeated with a next block to be predicted.

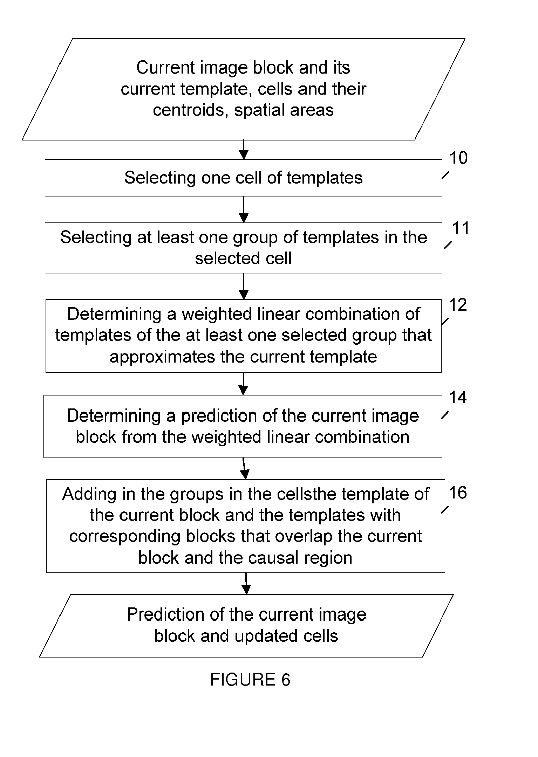

**Figure 6** represents a flowchart of a method for predicting a block $y_t$ of an image according to another specific and non-limitative embodiment. The image is further partitioned into spatial areas also called spatial bins. To this aim a uniform rectangular grid may be defined in the image. In a variant, the grid is non-uniform. The spatial areas are either larger or smaller than the blocks. In a variant, they are of the same size as the blocks.

On figure 1, the spatial areas Bm are delineated by dash-dotted lines. In each cell or sub-cell, the templates added in step 16 are divided into groups of templates depending on their spatial location in the image, specifically depending on the spatial area they belong to.

In step 10, one cell of templates is selected among the cells of the template space. To this aim, the centroid that is the closest to the template $\tilde{z}_t$ of the block $y_t$ is determined. To this aim, a distance is computed, for each centroid, between the centroid and the template $\tilde{z}_t$. The smallest distance indicates the closest centroid. The cell of the closest centroid is thus the selected cell. The distance is for example $\|\tilde{z}_t - c_m\|$ where $c_m$ is a centroid and $\|.\|$ is a norm, e.g. the L2-norm.

In step 11, at least one group of templates is selected in the cell selected in step 10. The at least one group is a group representative of spatial area overlapping a causal neighborhood of the current block $y_t$. In a variant, all the groups representative of spatial areas that overlap at least partially the causal neighborhood of the current block $y_t$ are selected. With reference to figure 1, the causal neighborhood is delineated by a dashed line. There are 8 spatial areas that overlap at least partially this causal neighborhood. Therefore, in the selected cell, 8 groups of templates are defined.

In step 12, a weighted linear combination of templates belonging the selected groups is determined so that the weighted linear combination approximates the current template $\tilde{z}_t$ of said current block. Instead of searching a weighted linear combination in the whole template space or in a whole cell, the weighted linear combination is determined only in a part of the template space, namely the selected groups of the selected cell. Therefore, the algorithm complexity is further reduced.

In step 14, a prediction $\hat{y}_t$ is determined for the block $y_t$ based on the weighted linear combination determined at step 12, e.g. by applying equation (1). The weights determined at step 12 are reused. The blocks used in the weighted linear combination are the blocks associated with the templates of the weighted linear combination determined at step 12. As an example, if the weighted linear combination determined at step 12 is

$$\sum_{j=0}^{K} w_j * \tilde{z}_j, \text{ then } \hat{y}_t = \sum_{j=0}^{K} w_j * \tilde{y}_j, \text{where } \tilde{y}_j \text{ is}$$

the block associated with the template $\tilde{z}_j$.

In step 16, the template of the current block and the templates with corresponding blocks that overlap the current block and the causal region are added in one of the cell, namely the one with the closest centroid. More precisely, in this cell, the template is added in the group representative of the spatial region the template belongs to. In the case where a template to be added in a cell in step 16 overlaps a plurality of spatial area, this template is added in the group of the cell based on its upper left pixel. In this case, in step 16, for a template to be added, the cell with the closest centroid is first determined. The template is added to this cell. More precisely, in the cell, the template is added to the group depending on its upper left pixel. Specifically, the spatial area to which this upper let pixel belongs is determined and the template is added to a group relating to this spatial area. Consequently, all templates in the same group of cell have their upper left sample located in the same spatial area.

In a variant, in the case where a template to be added in a cell in step 16 overlaps a plurality of spatial area, this template is added in several the groups relating to spatial areas overlapped by the template. In this case, in step 16, for a template to be added, the cell with the closest centroid is first determined. The template is added to this cell. More precisely, in the cell, the template is added to all groups relating to the spatial areas overlapped by the template.

By defining such spatial area, the algorithm complexity is further reduced. The method of prediction is advantageously part of an encoding or decoding method.

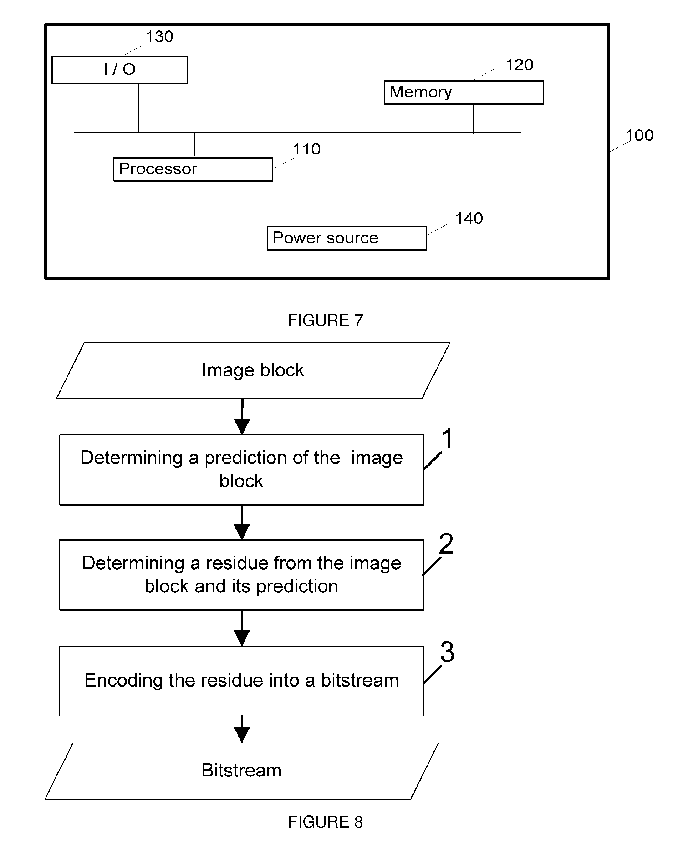

**Figure 7** represents an exemplary architecture of a prediction device 100 configured to predict at least one block of an image according to an exemplary and non-limiting embodiment. Advantageously, the prediction device 100 is part of a video encoder or of a video decoder. The prediction device 100 comprises one or more processor(s) 110, which could comprise, for example, a CPU, a GPU and/or a DSP (English acronym of Digital Signal Processor), along with internal memory 120 (e.g. RAM, ROM, and/or EPROM). The prediction device 100 comprises one or more Input/Output interface(s) 130, each adapted to display output information and/or allow a user to enter commands and/or data (e.g. a keyboard, a mouse, a touchpad, a webcam); and a power source 140 which may be external to the prediction device 100. The prediction device 100 may also comprise one or more network interface(s) (not shown). The image may be obtained from a source. According to different embodiments, the source can be, but is not limited to:

- a local memory, e.g. a video memory, a RAM, a flash memory, a hard disk ;

- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the prediction may be sent to a destination. As an example, the prediction is stored in a remote or in a local memory, e.g. a video memory or a RAM, a hard disk. In a variant, the prediction is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

According to an exemplary and non-limiting embodiment, the prediction device 100 further comprises a computer program stored in the memory 120. The computer program comprises instructions which, when executed by the prediction device 100, in particular by the processor 110, enable the prediction device 100 to execute the method described with reference to figure 5 or 6. According to a variant, the computer program is stored externally to the prediction device 100 on a non-transitory digital data support, e.g. on an external storage medium such as a HDD, CD-ROM, DVD, a read-only and/or DVD drive and/or a DVD Read/Write drive, all known in the art. The prediction device 100 thus comprises a mechanism to read the computer program. Further, the prediction device 100 could access one or more Universal Serial Bus (USB)-type storage devices (e.g., "memory sticks.") through corresponding USB ports (not shown).

According to exemplary and non-limiting embodiments, the prediction device 100 can be, but is not limited to:

- a mobile device ;
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

### Encoding

**Figure 8** represents a flowchart of a method for encoding a block $y_t$ of an image according to a specific and non-limitative embodiment.

In step 1, a prediction $\hat{y}_t$ is determined for $y_t$. The prediction is determined by the prediction method disclosed with reference to figure 5 or 6, i.e. by applying steps 10 to 16.

In step 2, a residue $r_t$ is determined from the prediction and the block. Specifically, the prediction is subtracted from the block. the $r_t = y_t\text{-}\hat{y}_t$

In step 3, the residue $r_t$ is encoded in a bitstream. Encoding usually comprises transforming the residue into coefficients which are quantized and entropy coded.

The method may be repeated with next blocks in order to encode a whole image or a whole sequence of images.

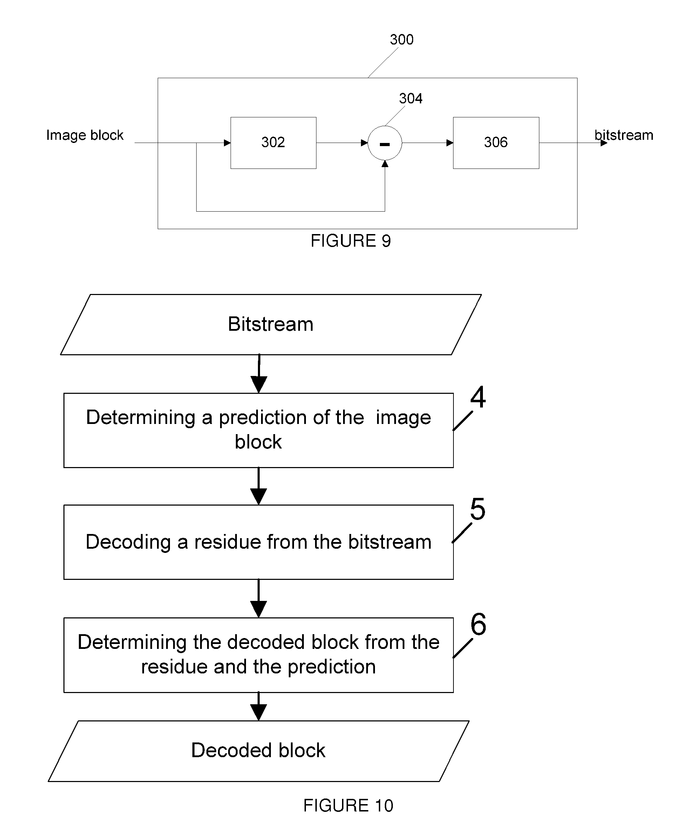

**Figure 9** represents an exemplary encoder 300 that implements the prediction method disclosed with respect to figures 5 or 6.

The encoder 300 receives an image block. The received image block is predicted by a prediction device 302. In particular, the prediction device 302 is configured to predict the block according to the prediction method disclosed with respect to figures 5 or 6. The prediction device 302 is connected to a subtractor 304 which is in turn connected to an encoding circuit 306. The subtractor 304 is configured to determine a residue by subtracting the prediction from the block to be coded. The encoding circuit 306 is configured to encode the residue in a bitstream. The bitstream may be sent to a destination, e.g. a remote decoding device. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

In a specific embodiment, the encoder 300 comprises one or more processor(s), which could comprise, for example, a CPU, a GPU and/or a DSP (English acronym of Digital Signal Processor), along with internal memory (e.g. RAM, ROM and/or EPROM). The encoder 300 comprises one or more Input/Output interface(s), each adapted to display output information and/or allow a user to enter commands and/or data (e.g. a keyboard, a mouse, a touchpad, a webcam); and a power source which may be external to the encoder 300. The encoder 300 may also comprise one or more network interface(s) (not shown).

### Decoding

**Figure 10** represents a flowchart of a method for decoding a block of an image according to a specific and non-limitative embodiment.

In step 4, a prediction $\hat{y}_t$ is determined for the block to be decoded. The prediction is determined by the prediction method disclosed with reference to figure 5 or 6, i.e. by applying steps 10 to 16.

In step 5, a residue $\tilde{r}_t$ is decoded from a bitstream. Decoding the residue $\tilde{r}_t$ usually comprises, entropy decoding a part of the bitstream into coefficients which are inverse quantized and inverse transformed into a decoded residue $\tilde{r}_t$.

In step 6, a decoded block $\tilde{y}_t$ is determined from the residue and the prediction. Specifically, the decoded residue $\tilde{r}_t$ is added to the prediction: $\tilde{y}_t = \hat{y}_t + \tilde{r}_t$.

The method may be repeated with next blocks in order to decode a whole image or a whole sequence of images.

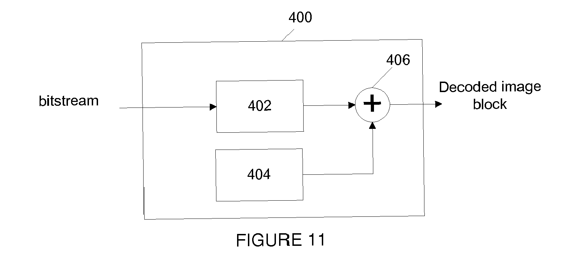

**Figure 11** represents an exemplary decoder 400 that implements the prediction method disclosed with respect to figures 5 or 6.

The decoder 400 receives a bitstream. The received bitstream is decoded by a decoding circuit 402 into a decoded residue. The decoder 400 comprises a prediction device 404. In particular, the prediction device 404 is configured to predict the block to be decoded according to the prediction method disclosed with respect to figures 5 or 6. The decoding circuit 402 and the prediction device 404 are connected to an adder 406. The adder is configured to add the decoded residue to the prediction in order to obtain a decoded block.

As an example, the decoded block is stored in a remote or in a local memory, e.g. a video memory or a RAM, a hard disk. In a variant, the decoded block is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

In a specific embodiment, the decoder 400 comprises one or more processor(s), which could comprise, for example, a CPU, a GPU and/or a DSP (English acronym of Digital Signal Processor), along with internal memory (e.g. RAM, ROM and/or EPROM). The decoder 400 comprises one or more Input/Output interface(s), each adapted to display output information and/or allow a user to enter commands and/or data (e.g. a keyboard, a mouse, a touchpad, a webcam); and a power source which may be external to the decoder 400. The decoder 400 may also comprise one or more network interface(s) (not shown).

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method, in an encoder or a decoder, for predicting a current block of an image comprising:

   - determining (10, 12) a weighted linear combination of templates belonging to a cell selected from a template space partitioned into cells so that the weighted linear combination approximates a template associated with said current block;
   - generating (14) a predictor for the current block from the determined weighted linear combination; and
   - adding (16) the current template and the templates of blocks that overlap the current block and the causal region of said current block in at least one cell of the template space.

2. The method of claim 1, wherein the method is applied on a next block.

3. The method of claim 1 or 2, wherein each cell is further partitioned into spatial areas and wherein said weighted linear combination of templates uses solely templates of spatial areas that overlap at least partially a causal neighborhood of said current block.

4. The method according to one of claims 1 to 3, wherein said template space is partitioned into cells, each of them being partitioned into sub-cells, wherein selecting a cell comprises selecting a cell and selecting in said cell a sub-cell.

5. The method according to one of claims 1 to 4, wherein in the case where each cell is represented by a centroid, selecting a cell comprises determining, for each cell, a distance between the centroid of said cell and the template associated with said current block and selecting the cell for which the distance is the shortest.

6. The method according to one of claims 1 to 5, wherein in the case where each cell is represented by a centroid, adding the current template and the templates of blocks that overlap the current block and a causal region of said current block in at least one cell of the template space comprises adding a template in a cell with the closest centroid.

7. A prediction device, in an encoder or a decoder, for predicting a current block of an image comprising at least a processor configured to:

   - determine a weighted linear combination of templates belonging to a cell selected from a template space partitioned into cells so that the weighted linear combination approximates a template associated with said current block;
   - generate a predictor for the current block from the determined weighted linear combination; and
   - add the current template and the templates of blocks that overlap the current block and the causal region of said current block in at least one cell of the template space.

8. The device of claim 7, wherein each cell is further partitioned into spatial areas and wherein said weighted linear combination of templates uses solely templates of spatial areas that overlap at least partially a causal neighborhood of said current block.

9. The device of claim 7 or 8, wherein said template space is partitioned into cells, each of them being partitioned into sub-cells, wherein selecting a cell comprises selecting a cell and selecting in said cell a sub-cell.

10. The device according to one of claims 7 to 9, wherein in the case where each cell is represented by a centroid, selecting a cell comprises determining, for each cell, a distance between the centroid of said cell and the template associated with said current block and selecting the cell for which the distance is the shortest.

11. The device according to one of claims 7 to 10, wherein in the case where each cell is represented by a centroid, adding the current template and the templates of blocks that overlap the current block and a causal region of said current block in at least one cell of the template space comprises adding a template in a cell with the closest centroid.

Block grid
Causal neighborhood
Spatial areas
Template $\tilde{z}_t$
Block $y_t$

$i = 0$      $m = 4$

$6 \cdot b^2$      $9$

$12 \cdot b^2$      $14$

$18 \cdot b^2$      $19$

FIGURE 1

$\tilde{z}_t$

$y_t$

FIGURE 2

FIGURE 3

FIGURE 4

Current image block and its
current template, cells and their
centroids

Selecting one cell of templates $\quad$ 10

Determining a weighted linear combination of
templates of the selected cell that approximates
the current template $\quad$ 12

Determining a prediction of the current image
block from the weighted linear combination $\quad$ 14

Adding in the cells the template of the current
block and the templates with corresponding
blocks that overlap the current block and the
causal region $\quad$ 16

Prediction of the current image
block and updated cells

FIGURE 5

Current image block and its
current template, cells and their
centroids, spatial areas

Selecting one cell of templates
10

Selecting at least one group of templates in the
selected cell
11

Determining a weighted linear combination of
templates of the at least one selected group that
approximates the current template
12

Determining a prediction of the current image
block from the weighted linear combination
14

Adding in the groups in the cellsthe template of
the current block and the templates with
corresponding blocks that overlap the current
block and the causal region
16

Prediction of the current image
block and updated cells

FIGURE 6

EP 3 054 678 A1

FIGURE 7

FIGURE 8

300

304

Image block

302

306

bitstream

FIGURE 9

Bitstream

Determining a prediction of the image block

4

Decoding a residue from the bitstream

5

Determining the decoded block from the residue and the prediction

6

Decoded block

FIGURE 10

400

406

bitstream

| 402 |

$+$

Decoded image
block

| 404 |

FIGURE 11

Europäisches
Patentamt

European
Patent Office

Office européen
des brevets

# EUROPEAN SEARCH REPORT

Application Number

EP 15 30 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TURKAN M ET AL: "Image Prediction Based on Neighbor-Embedding Methods", IEEE TRANSACTIONS ON IMAGE PROCESSING, vol. 21, no. 4, 1 April 2012 (2012-04-01), pages 1885-1898, XP011491957, ISSN: 1057-7149, DOI: 10.1109/TIP.2011.2170700 * abstract * * sections I and II * | 1-11 | INV. H04N19/105 G06K9/62 H04N19/176 H04N19/593 H04N19/136 |
| X | WO 2010/149913 A1 (FRANCE TELECOM [FR]; AMONOU ISABELLE [FR]; MOINARD MATTHIEU [FR]; CORO) 29 December 2010 (2010-12-29) * page 3, line 6 - page 6, line 22 * * page 8, line 12 - page 15, line 8 * | 1-11 | |
| A | CHERIGUI S ET AL: "Correspondence Map-Aided Neighbor Embedding for Image Intra Prediction", IEEE TRANSACTIONS ON IMAGE PROCESSING, vol. 22, no. 3, 1 March 2013 (2013-03-01), pages 1161-1174, XP011498220, ISSN: 1057-7149, DOI: 10.1109/TIP.2012.2227772 * abstract * * sections I, II, V-B and VII.D * | 1-11 | TECHNICAL FIELDS SEARCHED (IPC) H04N G06K |
| A | JAIN A K ET AL: "Data clustering: a review", ACM COMPUTING SURVEYS, vol. 31, no. 3, 1 September 1999 (1999-09-01), pages 264-323, XP002165131, ISSN: 0360-0300, DOI: 10.1145/331499.331504 * abstract * * sections 5, 5.1 and 5.2 * * figure 7 * | 1-11 | |

The present search report has been drawn up for all claims

| Place of search | Date of completion of the search | Examiner |
|---|---|---|
| The Hague | 8 July 2015 | André, Thomas |

EPO FORM 1503 03.82 (P04C01)

**ANNEX TO THE EUROPEAN SEARCH REPORT
ON EUROPEAN PATENT APPLICATION NO.**

EP 15 30 5164

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2015

| Patent document cited in search report | Publication date | Patent family member(s) | Publication date |
|---|---|---|---|
| WO 2010149913 A1 | 29-12-2010 | CN 102484705 A | 30-05-2012 |
| | | EP 2446630 A1 | 02-05-2012 |
| | | US 2012177115 A1 | 12-07-2012 |
| | | WO 2010149913 A1 | 29-12-2010 |

EPO FORM P0459

For more details about this annex : see Official Journal of the European Patent Office, No. 12/82